(19) Europäisches Patentamt
European Patent Office
Office européen des brevets

(11) EP 1 072 631 A2

(12) **EUROPEAN PATENT APPLICATION**

(43) Date of publication:
**31.01.2001 Bulletin 2001/05**

(51) Int. Cl.[7]: **C08J 5/18**

(21) Application number: **00116396.3**

(22) Date of filing: **28.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.07.1999 JP 21758399**

(71) Applicant:
**Sumitomo Chemical Company, Limited**
**Chuo-ku Osaka 541-8550 (JP)**

(72) Inventor: **Yamaguchi, Takanari**
**Tsukuba-shi, Ibaraki (JP)**

(74) Representative:
**VOSSIUS & PARTNER**
**Siebertstrasse 4**
**81675 München (DE)**

(54) **Gas barrier film and method for producing the same**

(57) Provided is a gas barrier film having a thickness of 18 µm or less composed of a thermoplastic resin wherein the oxygen permeation coefficient is $30 \times 10^{-15} cm^3 \cdot cm/cm^2 \cdot s \cdot cmHg$ or less, measured at a temperature of 23°C and a relative humidity of 60%.

The gas barrier film shows high gas barrierring property in spite of its small thickness, and has extremely large use in industry since the film does not release a halide gas in burning and further, does not leave ash after burning.

Figure 1

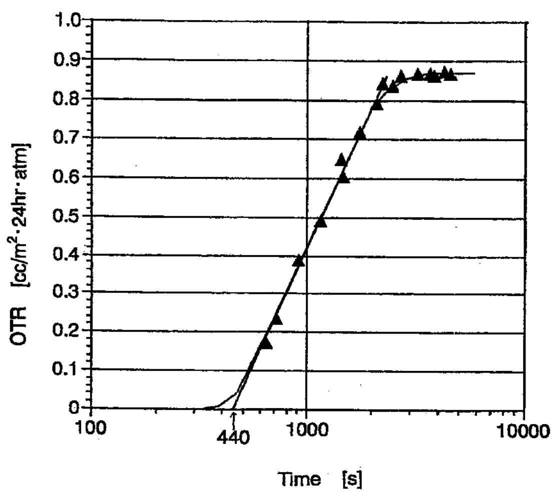


EP 1 072 631 A2

## Description

The present invention relates a film composed of a thermoplastic resin manifesting high gas barrierring properties though the thickness thereof is small and a method for producing the same.

Films having gas barrierring properties such as oxygen barrierring properties, water vapor barrierring properties and the like (gas barrier films) are used in fields such as packages of food, drink, medicine, industrial parts and the like. However, from the standpoints of environmental problems, for example, easiness to discard the film after use, and the like, there are required gas barrier films composed of thermoplastic resins instead of an aluminum foil, vinyl chloride and the like conventionally used.

As the thermoplastic resin usable for gas barrier film, there are polyacrylonitrile, and an ethylene-vinyl acetate copolymer, ethylene-vinyl alcohol copolymer, poly-p-phenylene terephthalate and the like, however, they do not have necessarily sufficient gas barrierring properties, and sometimes cause deterioration in gas barrierring properties under high humidity.

Though reports regarding a resin manifesting optical anisotropy in molten state (melting type liquid crystal polymer) are few in number since film processing thereof is difficult as compared with other thermoplastic resins, it is known that the resulted film shows excellent gas barrierring properties (Japanese Patent Application Laid-Open (JP-A) Nos. 7-304936, 9-286907, and the like).

As described above, a gas barrier film composed of a thermoplastic resin has been known, whereas a film which is as thin as 18 μm or less and further has extremely excellent gas barrierring properties has not been known yet.

In the field of wrapping films for food and the like, a thin gas barrier film is particularly required. However, it has been found that with a gas barrierring thermoplastic resin as conventionally used, high gas barrierring properties are not attained when it is thin.

Under such circumstances, a problem to be solved by the present invention is to provide a gas barrier film which is composed of a thermoplastic resin and shows high gas barrierring properties in spite of its small thickness, and a method for producing the same.

As a solution to the above problem, according to the present invention, a thin gas barrier film composed of a thermoplastic resin satisfying specific parameters, has been found. That is, the present invention relates to a gas barrier film having a thickness of 18 μm or less composed of a thermoplastic resin wherein the oxygen permeation coefficient is $30\times10^{-15}cm^3 \cdot cm/cm^2 \cdot s \cdot cmHg$ or less, measured at a temperature of 23°C and a relative humidity of 60%, and a gas barrier film having a thickness of 18 μm or less composed of a thermoplastic resin wherein the oxygen solubility coefficient is $3.0\times10^{-3}cm^3/cm^3 \cdot atm$ or less and the oxygen diffusion coefficient is $10.0\times10^{-10}cm^2/s$ or less, measured at a temperature of 23°C and a relative humidity of 60%. Further, the present invention relates to a gas barrier film having a thickness of 18 μm or less composed of a thermoplastic resin wherein the aforementioned thermoplastic resin is a wholly aromatic liquid crystal polyester comprising the following repeating units, and a method for producing a gas barrier film having a thickness of 18 μm or less wherein film forming is conducted using a wholly aromatic liquid crystal polyester comprising the following repeating units:

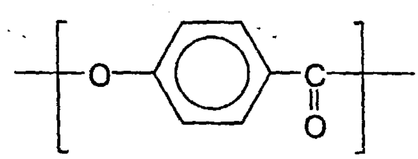

,

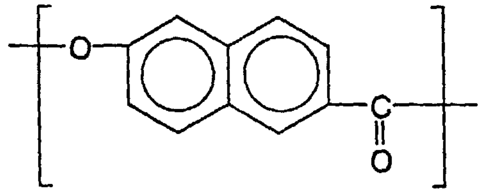

wherein, hydrogen atoms of the aromatic ring in the above-described repeating units may be substituted with a halogen atom, alkyl group having 1 to 3 carbon atoms or aryl group having 6 to 18 carbon atoms.

Fig. 1 is a view in which the time-dependency of the oxygen permeation amount in measuring oxygen permeability of a film obtained in Example 1 is shown. Permeation amount of oxygen per 24 hours per 1 $m^2$ of a measuring sample (film) under condition of 1 atm is plotted.

The first gas barrier film of the present invention is a gas barrier film having a thickness of 18 μm or less composed of a thermoplastic resin wherein the oxygen permeation coefficient is $30\times10^{-15}cm^3 \cdot cm/cm^2 \cdot s \cdot cmHg$ or less, measured at a temperature of 23°C and a relative humidity of 60%.

The oxygen permeation coefficient herein referred to is an oxygen permeation coefficient (unit: $cm^3 \cdot cm/cm^2 \cdot s \cdot cmHg$) obtained by measuring the oxygen permeability at a temperature of 23°C and a relative humidity of 60% according to JIS K7126, method B (isobaric method). Specifically, the oxygen permeability is measured at a temperature of 23°C and a relative humidity of 60% according to JIS K7126, method B (isobaric method), and the oxygen permeation coefficient is calculated according to the following formula (1).

$$P=(1.523\times10^{-12})\times OTR\times d \quad (1)$$

In the formula, P represents the oxygen permeation

coefficient (unit: $cm^3 \cdot cm/cm^2 \cdot s \cdot cmHg$), OTR represents the oxygen permeability (unit: $cm^3/m^2 \cdot 24$ hr • atm), and d represents the thickness (unit: mm) of a sample (film).

The gas barrier film having a small oxygen permeation coefficient of the present invention has extremely excellent oxygen barrierring properties even if the thickness of the film is small. The oxygen permeation coefficient of the gas barrier film of the present invention, measured at a temperature of 23°C and a relative humidity of 60% is preferably $25\times10^{-15} cm^3 \cdot cm/cm^2 \cdot s \cdot cmHg$ or less, more preferably $20\times10^{-15} cm^3 \cdot cm/cm^2 \cdot s \cdot cmHg$ or less.

As the gas barrier film of the present invention, a gas barrier film having an oxygen permeation coefficient of $30\times10^{-15} cm^3 \cdot cm/cm^2 \cdot s \cdot cmHg$ or less, measured at a temperature of 23°C and a relative humidity of 90% is further preferable. Such a gas barrier film is excellent in oxygen barrierring properties even under high humidity.

This oxygen permeation coefficient is associated with the product of the oxygen solubility coefficient and the oxygen diffusion coefficient, and the second gas barrier film of the present invention is a gas barrier film having small values in both of them (oxygen solubility coefficient and oxygen diffusion coefficient). Namely, the second gas barrier film of the present invention is a gas barrier film having a thickness of 18 µm or less composed of a thermoplastic resin wherein the oxygen solubility coefficient is $3.0\times10^{-3} cm^3/cm^3 \cdot atm$ or less and the oxygen diffusion coefficient is $10.0\times10^{-10} cm^2/s$ or less, measured at a temperature of 23°C and a relative humidity of 60%.

The gas barrier film of the present invention is preferably a gas barrier film having both features of the first gas barrier film and the second gas barrier film. Namely, as the gas barrier film of the present invention, preferable is a gas barrier film having a thickness of 18 µm or less composed of a thermoplastic resin wherein the oxygen permeation coefficient is $30\times10^{-15} cm^3 \cdot cm/cm^2 \cdot s \cdot cmHg$ or less, measured at a temperature of 23°C and a relative humidity of 60%, and the oxygen solubility coefficient is $3.0\times10^{-3} cm^3 \cdot atm$ or less and the oxygen diffusion coefficient is $10.0\times10^{-10} cm^2/s$ or less, measured at a temperature of 23°C and a relative humidity of 60%.

The oxygen solubility coefficient and oxygen diffusion coefficient herein referred to are obtained, respectively, as described below.

When the time-dependency of the oxygen permeation amount in measuring oxygen permeability (permeation amount of oxygen per 24 hours per 1 $m^2$ of a measuring sample (film) under condition of an atmosphere of 1 atm) is plotted, the oxygen permeation amount increases approximately linearly from certain point and reaches about constant value after a while. The range in which the oxygen permeation amount increases is approximated by straight line, and the time at the crossing point where the straight line crosses the time axis is regarded as lag time. The oxygen diffusion coefficient is calculated according to the following formula (2) using the thickness of a measuring sample (film) and the lag time.

$$D=d^2\div(6\times\Theta) \quad (2)$$

In the formula, D represents the oxygen diffusion coefficient (unit: $cm^2/s$), d represents the thickness (unit: cm) of a measuring sample (film), and Θ represents lag time (unit:s).

The oxygen solubility coefficient is calculated according to the following formula (3) using the oxygen permeation coefficient and the oxygen diffusion coefficient.

$$S=(76\times P)\div D \quad (3)$$

In the formula, S represents the oxygen solubility coefficient (unit: $cm^3/cm^3 \cdot atm$), P represents the oxygen permeation coefficient (unit: $cm^3 \cdot cm/cm^2 \cdot s \cdot cmHg$) and D represents the oxygen diffusion coefficient (unit: $cm^2/s$).

The detail calculation method is described in, for example, Weinkauf, D.H., et al., J.Polym. Sci., Polym. Phys., 30, 817 (1992), and the like.

When the above-mentioned solubility coefficient of a gas barrier film is small, the thickness-dependency of the oxygen permeability becomes small, and the oxygen barrierring property does not significantly decrease even if the thickness of the film is lowered. Further, when the above-mentioned diffusion coefficient of a gas barrier film is small, the oxygen barrierring property does not significantly decrease even if the thickness of the film is lowered. The gas barrier film of the present invention is preferably a gas barrier film having an oxygen solubility coefficient of $2.5\times10^{-3} cm^3/cm^3 \cdot atm$ or less and an oxygen diffusion coefficient of $8.0\times10^{-10} cm^2/s$ or less. Though it is more suitable if the solubility coefficient and diffusion coefficient are smaller, they never become $0.0\times10^{-3} cm^3/cm^3 \cdot atm$ and $0.0\times10^{-10} cm^2/s$, respectively.

As the gas barrier film of the present invention, a film having a water vapor permeability of 1.0 $g/m^2 \cdot 24$ hr or less, measured at a temperature of 25°C and a relative humidity of 90%, is preferable because of excellent moisture proofing property. The gas barrier film of the present invention has such a water vapor permeability, more preferably, of 0.8 $g/m^2 \cdot 24$ hr or less, further preferably, 0.6 $g/m^2 \cdot 24$ hr or less.

The water vapor permeability herein referred to means a value obtained by measurement at a temperature of 25°C and a relative humidity of 90%, according to JIS Z0208 (cup method).

As the thermoplastic resin which is a raw material of the gas barrier film of the present invention, a resin manifesting optical anisotropy in molten state,

namely, a melting type liquid crystal polymer is preferable. When a wholly aromatic liquid crystal polyester is used among others, high gas barrierring property is more preferably obtained even under high humidity.

As the wholly aromatic liquid crystal polyester, a polyester having a linear molecular chain is more preferable. Namely, further preferable is a wholly aromatic liquid crystal polyester in which aromatic rings constituting the wholly aromatic liquid crystal polyester are selected from the group consisting of a benzene ring, naphthalene ring and anthracene ring and when this aromatic ring is a benzene ring, the bonding mode in the molecular chain is 1,4-bond and when the aromatic ring is a naphthalene ring or an anthracene ring, the bonding mode in the molecular chain is 2,6-bond.

The wholly aromatic liquid crystal polyester is particularly preferably a wholly aromatic liquid crystal polyester comprising the following repeating units (hereinafter, sometimes abbreviated as "LCP1" ).

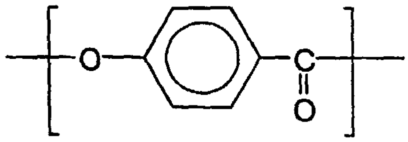

,

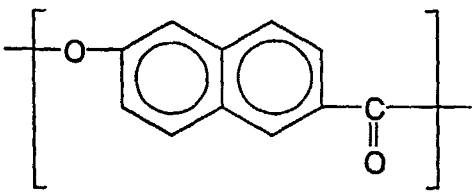

Hydrogen atoms of the aromatic ring in the above-described repeating units may be substituted with a halogen atom, alkyl group or aryl group, however, a ring having no such substitution is further preferable.

As LCP1, preferable is a wholly aromatic liquid crystal polyester comprising, as a repeating unit, a p-hydroxybenzoic acid unit in an amount of 30 to 90 mol% based on the total amount of repeating units and a 6-hydroxy-2-naphthoic acid unit in an amount of 70 to 10 mol% based on the total amount of repeating units.

As the above-mentioned liquid crystal polymer, there can also be used a resin composition comprising (A) a wholly aromatic liquid crystal polyester, as a continuous phase, and (B) a copolymer having a functional group reactive with the polyester (A), as a dispersed phase, and this resin composition is preferable since it can provide high gas barrierring property under high humidity, and additionally, it can be easily processed into a film and can give a film having more improved anisotropy, and more flexibility. The gas barrier film of the resin composition has relatively large thermal shrinkage(>1%). This may be sometimes useful for lamination with other film of thermoplastic polymers.

As this wholly aromatic liquid crystal polyester (A), there can be used the same polyesters as described for the above-mentioned wholly aromatic liquid crystal polyester.

As the functional group contained in the copolymer (B), having reactivity with the wholly aromatic liquid crystal polyester (A), any group may be available providing it has reactivity with the wholly aromatic liquid crystal polyester (A), and an oxazolyl group, epoxy group or amino group is preferable, and an epoxy group is more preferable. An epoxy group and the like may also be present as a part of other functional group, and the example thereof include a glycidyl group, for example.

The copolymer (B) is preferably a copolymer comprising 0.1 to 30% by weight of a unsaturated glycidyl carboxylate unit and/or a unsaturated glycidyl ether unit.

Specific examples of the unsaturated glycidyl carboxylate include glycidyl acrylate, glycidyl methacrylate, diglycidyl itaconate, triglycidyl butenetricarboxylate, glycidyl p-styrenecarboxylate and the like.

Examples of the unsaturated glycidyl ether include vinylglycidyl ether, allylglycidyl ether, 2-methylallylglycidyl ether, methacrylglycidyl ether, styrene-p-glycidyl ether and the like.

The unsaturated glycidyl carboxylate is preferably a compound represented by the general formula:

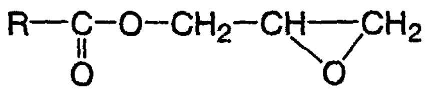

wherein, R is a hydrocarbon group having 2 to 13 carbon atoms containing an ethylenically unsaturated bond, and the unsaturated glycidyl ether is preferably a compound represented by the general formula:

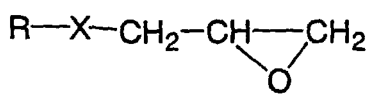

wherein, R is a hydrocarbon group having 2 to 18 carbon atoms containing an ethylenically unsaturated bond, and X is $-CH_2-O-$ or

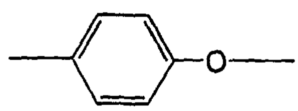

.

Further, the above-mentioned copolymer (B) may be a thermoplastic resin or rubber, or may be a mixture of a thermoplastic resin and rubber. Rubber which provides excellent thermal stability and flexibility of a film obtained by using the resin composition, is more preferable.

The specific example of the copolymer (B) includes (meth)acrylate-ethylene-(unsaturated glycidyl carboxylate and/or unsaturated glycidyl ether) copolymer rubber, as rubber having an epoxy group.

The (meth)acrylate herein referred to is an ester obtained from acrylic acid or methacrylic acid and alcohol. The alcohol is preferably an alcohol having 1 to 8 carbon atoms. Specific examples of the (meth)acrylate include methyl acrylate, methyl methacrylate, n-butyl acrylate, n-butyl methacrylate, tert-butyl acrylate, tert-butyl methacrylate, 2-ethylhexyl acrylate, 2-ethylhexyl methacrylate and the like. As the (meth)acrylate, one may be used alone, or two or more may be used in combination.

The amount of a (meth)acrylate unit is preferably over 40% by weight and less then 97% by weight, more preferably, from 45 to 70% by weight, and the amount of an ethylene unit is 3% by weight or more and less than 50% by weight, more preferably, from 10 to 49% by weight, and the amount of a unsaturated glycidyl carboxylate unit and/or a unsaturated glycidyl ether unit is from 0.1 to 30% by weight, more preferably, from 0.5 to 20% by weight.

Outside the above-mentioned ranges, the thermal stability and mechanical property of the resulting film may become insufficient undesirably.

This copolymer rubber can be produced by a usual method, for example, bulk polymerization, emulsion polymerization, solution polymerization and the like using a free radical initiator. Typical polymerization methods are described in Japanese Patent Application Publication (JP—B) Nos. 46-45085, 61-127709 and the like, and the copolymer rubber can be produced under conditions of a pressure of 500 kg/cm$^2$ or more and a temperature from 40 to 300°C, in the presence of a polymerization initiator which produces a free radical.

Specific examples of the copolymer (B) include epoxy group-containing ethylene copolymers composed of (a) 50 to 99% by weight of an ethylene unit, (b) 0.1 to 30% by weight, preferably 0.5 to 20% by weight of a unsaturated glycidyl carboxylate unit and/or a unsaturated glycidyl ether unit, and (c) 0 to 50% by weight of an ethylenically unsaturated ester compound unit, as a thermoplastic resin having an epoxy group.

Examples of the ethylenically unsaturated ester compound (c) include vinyl carboxylates such as vinyl acetate, vinyl propionate, methyl acrylate, ethyl acrylate, butyl acrylate, methyl methacrylate, ethyl methacrylate, butyl methacrylate and the like, and α,β-unsaturated alkyl carboxylates, and the like. Particularly, vinyl acetate, methyl acrylate and ethyl acrylate are preferable.

Specific examples of the above-mentioned epoxy group-containing ethylene copolymer include copolymers composed of an ethylene unit and glycidyl methacrylate unit, copolymers composed of an ethylene unit, glycidyl methacrylate unit and methyl acrylate unit, copolymers composed of an ethylene unit, glycidyl methacrylate unit and ethyl acrylate unit, copolymers composed of an ethylene unit, glycidyl methacrylate unit and vinyl acetate unit, and the like.

The above-mentioned epoxy group-containing ethylene copolymer is produced by a high pressure radical polymerization method in which a unsaturated epoxy compound and ethylene are copolymerized, usually, in the presence of a radical generating agent, at a pressure of 500 to 4000 atom and a temperature of 100 to 300°C, in the presence or absence of a suitable solvent and chain transfer agent. Alternatively, it is also produced by a method in which a unsaturated epoxy compound and radical generating agent are mixed with polyethylene, and they are subjected to melting graft copolymerization in an extruder.

The above-mentioned resin composition is a resin composition comprising (A) a wholly aromatic liquid crystal polyester, as a continuous phase, and (B) a copolymer having a functional group reactive with the polyester (A), as a dispersed phase. When the wholly aromatic liquid crystal polyester (A) is not a continuous phase, gas barrierring property and the like of a film obtained by using the resin composition remarkably decrease undesirably.

The third gas barrier film of the present invention is a gas barrier film having a thickness of 18 μm or less composed of a thermoplastic resin wherein the thermoplastic resin is the above-mentioned LCP1. A film composed of LCP1 is excellent in the oxygen barrierring property and water vapor barrierring property even if the thickness thereof is small. Herein, it is also possible to use, instead of LCP1, a resin composition prepared by using LCP1 as the wholly aromatic liquid crystal polyester (A) in the above-mentioned resin composition. From the standpoint of gas barrierring property, it is more preferable to use LCP1 than to use this resin composition.

The gas barrier film of the present invention is a gas barrier film as described above wherein the thickness thereof is 18 μm or less. Even a thinner film can provide high gas barrierring property providing the above-described constitution is satisfied, therefore, it is preferable to apply such a theory to a thinner film, for example, a gas barrier film having a thickness of 15 μm or less. That is, the thickness of the gas barrier film of the present invention is preferably 15 μm or less, further preferably 12 μm or less.

The lower limit of this thickness is not restricted, and usually 3 μm or more.

The method for obtaining a gas barrier film of the present invention is preferably conducted by melt

extrusion, and further preferably, a blown film forming method is used. By melting and kneading a resin in an extruder, the resin becomes more uniform and a gas barrierring ability thereof is stabilized. Further, by use of a blown film forming method, drawing of a melted resin is realized easily, and a gas barrierring ability is improved by the drawing. For example, when a thin film is obtained by press molding, a pin hole and the like may be formed to reduced a gas barrierring ability, undesirably.

As the thermoplastic resin used in blown film forming, it is preferable to use a resin which has been sufficiently kneaded and homogenized, for realizing uniform blown bubbles, and for stabilizing a gas barrierring property of the resulted film. For example, there are listed a method in which melt kneading is conducted twice, as well as other methods.

When blown film forming is conducted not by using the above-mentioned resin composition but by using a wholly aromatic liquid crystal polyester, as a thermoplastic resin, it is preferable to set the temperature of a raw material (thermoplastic resin) charging part of an extruder to temperatures lower than the flow initiation temperature of the wholly aromatic liquid crystal polyester used. When the setting temperature is higher than the flow initiation temperature, film forming may be impossible due to discharge failure and the like, undesirably. Further, a device to control the setting temperature of the lowest stream part an extruder and the setting temperature of a die to temperatures higher than the flow initiation temperature by +20°C or more is preferably adopted for inflating stably and uniformly a discharged wholly aromatic liquid crystal polyester.

Herein, the flow initiation temperature is measured by using a capillary type rheometer (for example, Shimadzu Flow Tester type CFT-500, manufactured by Shimadzu Corp.), and means a temperature (°C) at which the melt viscosity is 48000 poise when a thermoplastic resin which has been melted by heating at a temperature raising speed of 4°C/min. is extruded through a nozzle having an internal diameter of 1 mm and a length of 10 mm under a load of 100 kgf/$cm^2$.

The gas barrier film of the present invention can be a film laminated with other film. In this case, an adhesive may be present between layers, and the gas barrier film of resin composition of the present invention is more preferable due to adequate thermal shrinkage.

EXAMPLE

The following examples illustrate the present invention, but these are only examples and do not limit the scope of the present invention.

(Measurement of oxygen permeability)

The oxygen permeability at a temperature of 23°C and a relative humidity of 60% was measured by using an oxygen permeability measuring apparatus (OX-TRAN10/50A, manufactured by MOCON), using a test gas containing 99.99% of oxygen and a carrier gas containing 98% of nitrogen and 2% of hydrogen, at a temperature of 23°C and a relative humidity on both of the test gas side and the carrier gas side of 60%, according to JIS K7126 method B (isobaric method). The unit of the oxygen permeability is cc/$m^2$•24 hr•atm, at the thickness of a film used, without thickness conversion.

The oxygen permeation coefficient was calculated according to the following formula (1).

$$P=(1.523\times10^{-12})\times OTR\times d \qquad (1)$$

In the formula, P represents the oxygen permeation coefficient (unit: $cm^3$•cm/$cm^2$•s•cmHg), OTR represents the oxygen permeability (unit: $cm^3$/$m^3$•24 hr•atm), and d represents the thickness (unit: mm) of a measuring sample (film).

When the time-dependency of the oxygen permeation amount in measuring oxygen permeability (permeation amount of oxygen per 24 hours per 1 $m^2$ of a measuring sample (film) under condition of an atmosphere of 1 atm) was plotted, this oxygen permeation amount increased approximately linearly from certain point and reached about constant value after a while. The range in which the oxygen permeation amount increases was approximated linearly, and the time at the crossing point where the resulted line crosses the time axis was recorded as lag time. The oxygen diffusion coefficient was calculated according to the following formula (2) using the thickness of a measuring sampler (film) and the lag time.

$$D=d^2\div(6\times\Theta) \qquad (2)$$

In the formula, D represents the oxygen diffusion coefficient (unit: $cm^2$/s), d represents the thickness (unit: cm) of a measuring sample (film), and Θ represents lag time (unit:s).

The oxygen solubility coefficient was calculated according to the following formula (3) using the oxygen permeation coefficient and the oxygen diffusion coefficient.

$$S=(76\times P)\div D \qquad (3)$$

In the formula, S represents the oxygen solubility coefficient (unit: $cm^3$/$cm^3$•atm), P represents the oxygen permeation coefficient (unit: $cm^3$•cm/$cm^2$•s•cmHg) and D represents the oxygen diffusion coefficient (unit: $cm^2$/s).

(Water vapor permeability)

The water vapor permeability was measured under conditions of a temperature of 25°C and a relative

humidity of 90%, according to JIS Z0208 (cup method). The unit is g/m$^2$ • 24 hr. This is a value at the thickness of a film, without thickness conversion.

(thermal shrinkage)
A length each is marked on test film along its machine direction(MD) and transverse one(TD). The specimen is allows to stand in a high-temperature circulating-air oven at 250 °C for 30 minutes. Difference in the length before and after the heat treatment is determined.

Referential Example 1

Into a polymerization chamber equipped with a comb type stirring blade were charged 16.6 kg (12.1 mol) of p-hydroxybenzoic acid, 8.4kg (4.5 mol) of 6-hydroxy-2-naphtoic acid and 18.6 kg (18.2 mol) of acetic anhydride, the mixture was heated while stirring under nitrogen gas atmosphere, and allowed to polymerize for 1 hour at 320°C, further, to polymerize for 1 hour at 320°C under reduced pressure of 2.0 torr. During this time, distillation of by-produced acetic acid out of the system was continued. Then, the system was cooled gradually, and a polymer obtained at 180°C was removed out of the system.

The resulted polymer was ground by a hammer mill manufactured by Hosokawa Micron Corp., to give particles having a particle size of 2,5 mm or less. This was further treated at 240°C for 5 hours under nitrogen atmosphere in a rotary kiln to give a wholly aromatic liquid crystal polyester in the form of particle having a flow initiation temperature of 270°C composed of the following repeating units. Hereinafter, this wholly aromatic liquid crystal polyester is abbreviated as A-1.

Herein, the flow initiation temperature means a temperature (°C) at which the melt viscosity is 48000 poise when a resin which has been melted by heating at a temperature raising speed of 4°C/min. is extruded through a nozzle having an internal diameter of 1 mm and a length of 10 mm under a load of 100 kgf/cm$^2$, using Shimadzu Flow Tester type CFT-500 manufactured by Shimadzu Corp.

The wholly aromatic liquid crystal polyester A-1 revealed optical anisotropy at a temperature of 280°C or more under pressure, when observed by a polarizing microscope. The ratio of repeating structure units in A-1 is as shown below.

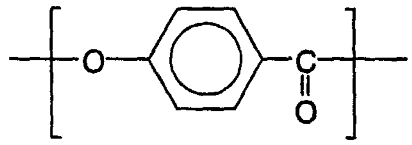
,
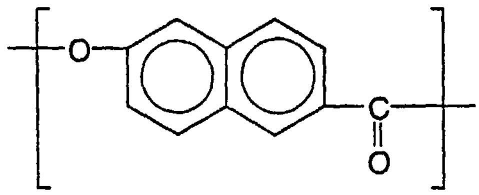

= 73:27

Referential Example 2

Into a polymerization chamber equipped with a comb type stirring blade were charged 8.3 kg (60 mol) of p-acetoxybenzoic acid, 2.49 kg (15 mol) of terephthalic acid, 0.83 kg (5 mol) of isophthalic acid and 5.45 kg (20.2 mol) of 4,4'-diacetoxydiphenyl, the mixture was heated while stirring under nitrogen gas atmosphere, and allowed to polymerize for 1 hour at 330°C. The polymerization was conducted with vigorous stirring while liquefying an acetic acid gas by-produced during this procedure and recovering and removing the liquid. Then, the system was cooled gradually, and a polymer obtained at 200°C was removed out of the system. This resulted polymer was ground by a hammer mill manufactured by Hosokawa Micron Corp., to give a particle having a particle size of 2,5 mm or less. This was further treated at 290°C for 6 hours under nitrogen atmosphere in a rotary kiln to give a wholly aromatic liquid crystal polyester in the form of a particle having a flow initiation temperature of 346°C composed of the following repeating units.

Hereinafter, this wholly aromatic liquid crystal polyester is abbreviated as A-2. This polymer revealed optical anisotropy at a temperature of 359°C or more under pressure. The repeating structure units in A-2 are as shown below.

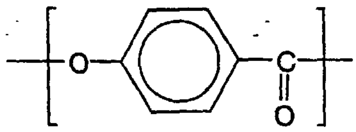
:
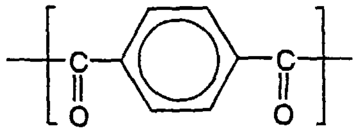
:
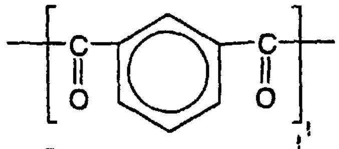
:
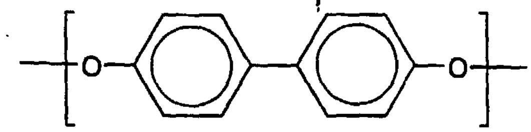

= 60:15:5:20

Referential Example 3

A rubber consisting of methylacrylate/ethylene/glycidyl methacrylate = 59.0/38.7/2.3 (weight ratio) was obtained according to Example 5 described in JP-A-61-127709. The rubber has Mooney viscosity of 15, and heat of crystal-fusion of less than 1 J/g. Hereinafter, this rubber is abbreviated as Y-1. Here, the Mooney viscosity is measured according to JIS K6300 with using a large rotor. The heat of crystal-fusion is measured using DSC with heating the rubber from -150°C to 100°C at the rate of 20°C/minute.

Example 1

A-1 was melt-kneaded using a type TEX-30 twin-screw extruder manufactured by The Japan Steel Works. Ltd at a set average temperature of a cylinder of 285°C and a screw revolution of 250 rpm, to give a pellet of A-1. Hereinafter, this thermoplastic resin in the form of a pellet is abbreviated as P-1. The flow initiation temperature of P-1 was 263°C.

P-1 was melt-kneaded again under the same conditions as described above to obtain a pellet. This thermoplastic resin pellet revealed optical anisotropy at a temperature of 272°C or more under pressure. The flow initiation temperature was 260°C. Hereinafter, this thermoplastic resin in a form of pellet is abbreviated as PP-1.

PP-1 was melt-extruded using a single-screw extruder of 60 mm ∅ equipped with a cylindrical die(blown film die), while setting the cylinder temperatures of extruder at 255°C (raw material charging part), 285°C and 295°C respectively from the upstream side, at a screw revolution of 100 rpm, and the molten resin was extruded upward through a cylindrical die which had a diameter of 50 mm and a lip interval of 1.0 mm and of which set temperature was controlled to 295°C which was +35°C higher than the flow initiation temperature of PP-1. Dry air was compressed into a hollow part of this cylindrical molten resin, to inflate the resin, then the resin was passed through nip rolls to obtain a film. This film had a blow up ratio of 3.8, drawdown ratio of 18.8, and the measured average thickness of the film was 14 μm. The oxygen permeability of this film was measured at a temperature of 23°C and a relative humidity of 60%, to find it was 0.87 $cc/m^2 \cdot 24\ hr \cdot atm$, and the oxygen permeation coefficient was $18.6 \times 10^{-15} cm^3 \cdot cm/cm^2 \cdot s \cdot cmHg$.

The lag time obtained from the figure (Fig. 1) showing the time-dependency of oxygen permeability was 440 seconds, accordingly, the diffusion coefficient was $7.4 \times 10^{-10} cm^2/s$, and the solubility coefficient was $1.91 \times 10^{-3} cm^3/cm^3 \cdot atm$.

The water vapor permeability was measured to find it was as extremely excellent as 0.25 $g/m^2 \cdot 24\ hr$.

The oxygen permeability was measured at a temperature of 23°C and a relative humidity of 90%, to find it was 0.91 $cc/m^2 \cdot 24\ hr \cdot atm$, and the oxygen permeation coefficient was $19.4 \times 10^{-15} cm^3 \cdot cm/cm^2 \cdot s \cdot cmHg$.

Example 2

A film having a measured average thickness of 11 μm was obtained in the same manner as in Example 1 except that the blow up ratio was 4.2 and the drawdown ratio was 22.3.

The oxygen permeability of this film was measured , to find it was 0.95 $cc/m^2 \cdot 24\ hr \cdot atm$ (at relative humidity of 60%) and 1.02 $cc/m^2 \cdot 24\ hr \cdot atm$ (at relative humidity of 90%), and the oxygen permeation coefficient was $15.9 \times 10^{-15} cm^3 \cdot cm/cm^2 \cdot s \cdot cmHg$ (at relative humidity of 60%) and $17.1 \times 10^{-15} cm^3 \cdot cm/cm^2 \cdot s \cdot cmHg$ (at relative humidity of 90%).

The lag time obtained from a view showing the time-dependency of the oxygen permeability was 340 seconds, accordingly, the diffusion coefficient was $5.9 \times 10^{-10} cm^2/s$, and the solubility coefficient was $2.05 \times 10^{-3} cm^3/cm^3 \cdot atm$.

The water vapor permeability was measured to find it was as extremely excellent as 0.29 $g/m^2 \cdot 24\ hr$. The oxygen permeability was measured at a temperature of 23°C and a relative humidity of 90%, to find it was 1.02 $cc/m^2 \cdot 24\ hr \cdot atm$, and the oxygen permeation coefficient was $17.1 \cdot 10^{-15} cm^3 \cdot cm/cm^2 \cdot s \cdot cmHg$.

Example 3

96.6wt% of A-1 and 3.5wt% of Y-1 were

melt-kneaded using a type TEX-30 twin-screw extruder manufactured by The Japan Steel Works. Ltd at a set average temperature of a cylinder of 285°C and a screw revolution of 350 rpm, to give a pellet of S-1. Hereinafter, this thermoplastic resin in the form of a pellet is abbreviated as S-1. The flow initiation temperature of P-1 was 264°C.

S-1 was melt-kneaded again under the same conditions as described above to obtain a pellet. This thermoplastic resin pellet revealed optical anisotropy at a temperature of 271°C or more under pressure. The flow initiation temperature was 262°C. Hereinafter, this thermoplastic resin in the form of pellet is abbreviated as ss-1.

The resin pellet ss-1 was melt-extruded using a single-screw extruder of 60 mm ∅ equipped with a cylindrical die(blown film die), while setting the cylinder temperatures of extruder at 255°C (raw material charging part), 285°C and 295°C respectively from the upstream side, at a screw revolution of 100 rpm, and the molten resin was extruded upward through a cylindrical die which had a diameter of 50 mm and a lip interval of 1.0 mm and of which set temperature was controlled to 297°C which was +35°C higher than the flow initiation temperature of ss-1. Dry air was compressed into a hollow part of this cylindrical molten resin, to inflate the resin, then the resin was passed through nip rolls to obtain a film. This film had a blow up ratio of 3.6, drawdown ratio of 30.0, and the measured average thickness of the film was 10 µm. The oxygen permeability of this film was measured at a temperature of 23°C and a relative humidity of 60%, to find it was 1.5 $cc/m^2 \cdot 24\ hr \cdot atm$, and the oxygen permeation coefficient was $22.8 \times 10^{-15} cm^3 \cdot cm/cm^2 \cdot s \cdot cmHg$.

The water vapor permeability was measured to find it was as extremely excellent as 0.30 $g/m^2 \cdot 24\ hr$.

The oxygen permeability was measured at a temperature of 23°C and a relative humidity of 90%, to find it was 1.7 $cc/m^2 \cdot 24\ hr \cdot atm$, and the oxygen permeation coefficient was $25.9 \times 10^{-15} cm^3 \cdot cm/cm^2 \cdot s \cdot cmHg$.

The thermal shrinkage of this film was 2.15% for MD and 1.04% for TD.

Comparative Example 1

A-2 was melt-kneaded using a type TEX-30 twin-screw extruder manufactured by The Japan Steel Works. Ltd at a set average temperature of a cylinder of 355°C and a screw revolution of 250 rpm, to give a pellet of A-2. This thermoplastic resin pellet revealed optical anisotropy at a temperature of 348°C or more under pressure. Hereinafter, this thermoplastic resin in the form of a pellet is abbreviated as P-2. The flow initiation temperature of P-2 was 342°C.

P-2 was melt-kneaded again under the same conditions as described above to obtain PP-2. The flow initiation temperature of PP-2 was 340°C.

PP-2 was melt-extruded using a single-screw extruder of 60 mm ∅ equipped with a cylindrical die, while setting the cylinder temperatures at 335°C (raw material charging part), 350°C and 360°C respectively from the upstream side, at a screw revolution of 80 rpm, and the molten resin was extruded upward through a cylindrical die which had a diameter of 50 mm, a lip interval of 1.0 mm and a die set temperature of 365°C, dry air was compressed into a hollow part of this cylindrical molten resin, to inflate the resin, then the resin was passed through nip rolls to obtain a film. The blow up ratio was 4.1, the drawdown ratio was 15.5, and the measured average thickness of the film was 16 µm. The oxygen permeability of this film was measured, to find it was 4.33 $cc/m^2 \cdot 24\ hr \cdot atm$, and the oxygen permeation coefficient was $105.5 \times 10^{-15} cm^3 \cdot cm/cm^2 \cdot s \cdot cmHg$.

The lag time obtained from a view showing the time-dependency of the oxygen permeability was 140 seconds, accordingly, the diffusion coefficient was $30.5 \times 10^{-10} cm^2/s$, and the solubility coefficient was $2.63 \times 10^{-3} cm^3/cm^3 \cdot atm$ which was not admitted as excellent.

The water vapor permeability was measured to find it was 0.7 $g/m^2 \cdot 24\ hr$.

Comparative Example 2

A film having a thickness of 10 µm was obtained in the same manner as in Comparative Example 1 except that the blow up ratio was 4.2 and the drawdown ratio was 24.0.

The oxygen permeability of this film was measured, to find it was 8.2 $cc/m^2 \cdot 24\ hr \cdot atm$, and the oxygen permeation coefficient was $124.9 \times 10^{-15} cm^3 \cdot cm/cm^2 \cdot s \cdot cmHg$.

The lag time obtained from a view showing the time-dependency of the oxygen permeability was 55 seconds, accordingly, the diffusion coefficient was $30.3 \times 10^{-10} cm^2/s$, and the solubility coefficient was $3.13 \times 10^{-3} cm^3/cm^3 \cdot atm$.

The water vapor permeability was measured to find it was 1/1 $g/m^2 \cdot 24\ hr$.

According to the present invention as described above, a gas barrier film which is composed of a thermoplastic resin and shows high gas barrierring property in spite of its small thickness, and a method for producing the same are provided. This gas barrier film has extremely large use value in industry since such a gas barrier film which has excellent oxygen barrierring property and water vapor barrierring property can be obtained and such a gas barrier film which does not release a halide gas in burning and further, does not leave ash after burning can be obtained.

## Claims

1. A gas barrier film having a thickness of 18 µm or

less composed of a thermoplastic resin wherein the oxygen permeation coefficient is $30\times10^{-15}cm^3 \cdot cm/cm^2 \cdot s \cdot cmHg$ or less, measured at a temperature of 23°C and a relative humidity of 60%.

**2.** A gas barrier film having a thickness of 18 μm or less composed of a thermoplastic resin wherein the oxygen permeation coefficient is $30\times10^{-15}cm^3 \cdot cm/cm^2 \cdot s \cdot cmHg$ or less, measured at a temperature of 23°C and a relative humidity of 90%.

**3.** A gas barrier film having a thickness of 18 μm or less composed of a thermoplastic resin wherein the oxygen solubility coefficient is $3.0\times10^{-3}cm^3/cm^3 \cdot atm$ or less and the oxygen diffusion coefficient is $10.0\times10^{-10}cm^2/s$ or less, measured at a temperature of 23°C and a relative humidity of 60%.

**4.** The gas barrier film according to Claim 1 or 2 wherein the oxygen solubility coefficient is $3.0\times10^{-3}cm^3/cm^3 \cdot atm$ or less and the oxygen diffusion coefficient is $10.0\times10^{-10}cm^2/s$ or less, measured at a temperature of 23°C and a relative humidity of 60%.

**5.** The gas barrier film according to any of Claims 1 to 4 wherein the water vapor permeability is 1.0 $g/m^2 \cdot 24$ hr or less, measured at a temperature of 25°C and a relative humidity of 90%.

**6.** The gas barrier film according to any of Claims 1 to 5 wherein the thermoplastic resin is a resin manifesting optical anisotropy in molten state.

**7.** The gas barrier film according to any of Claims 1 to 5 wherein the thermoplastic resin is a wholly aromatic liquid crystal polyester.

**8.** The gas barrier film according to any of Claims 1 to 5 wherein the thermoplastic resin is a resin composition comprising (A) a wholly aromatic liquid crystal polyester, as a continuous phase, and (B) a copolymer having a functional group reactive with the polyester (A), as a dispersed phase.

**9.** The gas barrier film according to Claim 7 or 8 wherein the wholly aromatic liquid crystal polyester is a wholly aromatic liquid crystal polyester comprising the following repeating units:

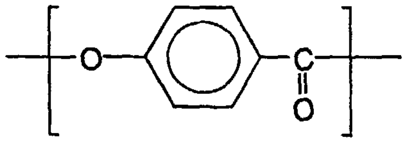
,
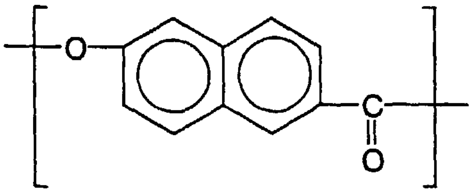

wherein, hydrogen atoms of the aromatic ring in the above-described repeating units may be substituted with a halogen atom, alkyl group or aryl group.

**10.** A gas barrier film having a thickness of 18 μm or less composed of a thermoplastic resin wherein said thermoplastic resin is a wholly aromatic liquid crystal polyester comprising the following repeating units:

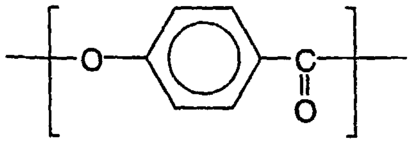
,
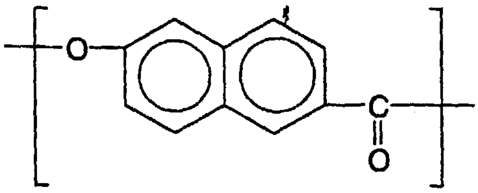

wherein, hydrogen atoms of the aromatic ring in the above-described repeating units may be substituted with a halogen atom, alkyl group or aryl group.

**11.** The gas barrier film according to any of Claims 1 to 10 wherein the thickness of the film is 15 μm or less.

**12.** The gas barrier film according to any of Claims 1 to 11 wherein the gas barrier film is a film obtained by a blown film forming method.

**13.** A method for producing a gas barrier film having a thickness of 18 μm or less wherein film forming is conducted using a wholly aromatic liquid crystal polyester comprising the following repeating units:

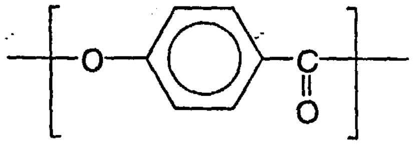

,

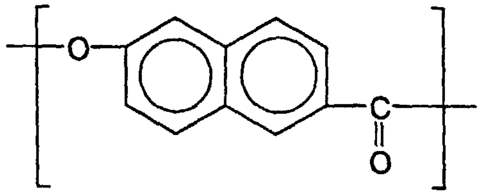

wherein, hydrogen atoms of the aromatic ring in the above-described repeating units may be substituted with a halogen atom, alkyl group or aryl group.

**14.** The method for producing a gas barrier film according to Claim 13 wherein the film forming is blown film forming.

**15.** The method for producing a gas barrier film according to Claim 13 or 14 wherein the thickness of the film is 15 µm or less.

Figure 1

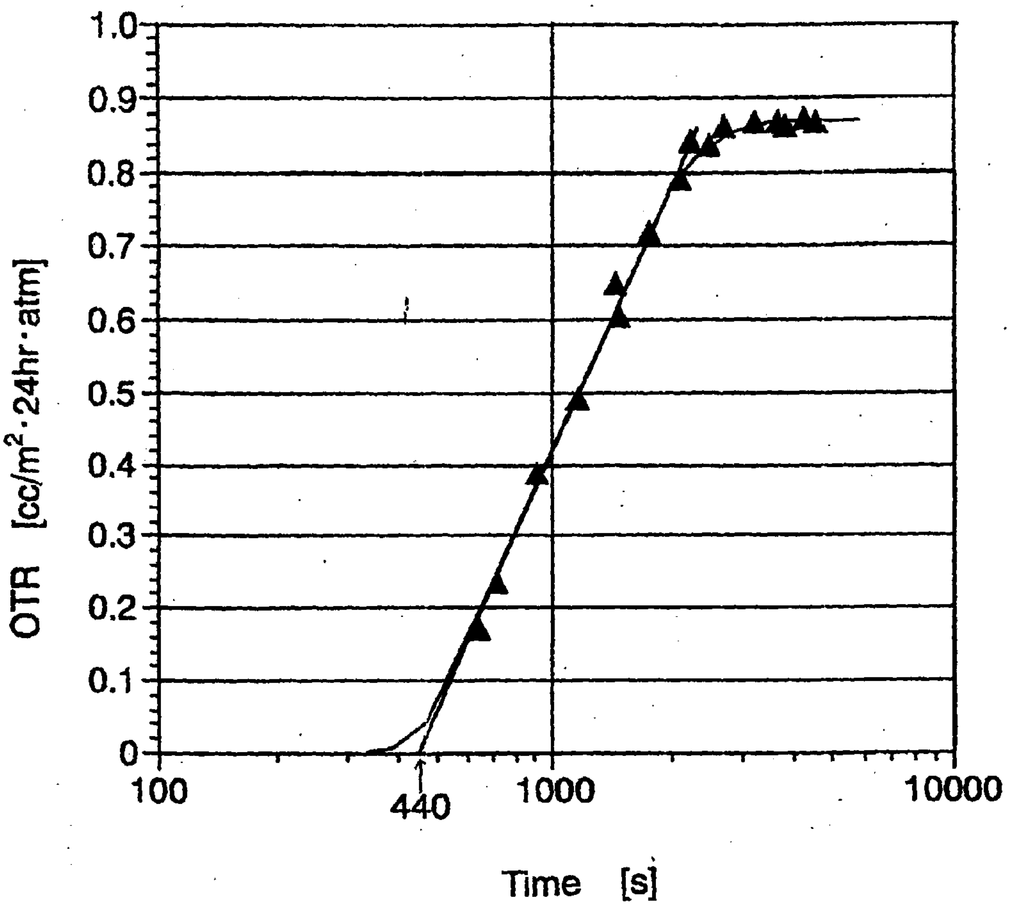
1.0
0.9
0.8
0.7
0.6
0.5
0.4
0.3
0.2
0.1
0
OTR [cc/m2·24hr·atm]
100
440
1000
10000
Time [s]